# FASCICULE DE BREVET EUROPEEN

(11) **EP 2 219 840 B1**
(45) Date de publication et mention de la délivrance du brevet: **25.07.2012**
(21) Numéro de dépôt: 08854713.8
(22) Date de dépôt: 21.11.2008
(51) Int. Cl.: B29C 33/50, B29C 33/38, B29C 70/44

(54) **PROCÉDÉ DE RÉALISATION D'UN NOYAU DE MOULAGE POUR LA FABRICATION D'UNE PIÈCE COMPLEXE EN MATÉRIAU COMPOSITE**
VERFAHREN ZUR HERSTELLUNG EINES FORMKERNS ZUR HERSTELLUNG EINES KOMPLEXEN TEILS AUS EINEM VERBUNDMATERIAL
METHOD FOR MAKING A MOULDING CORE FOR MAKING A COMPLEX PART MADE OF A COMPOSITE MATERIAL

(30) Priorité: 30.11.2007 FR 0759453
(43) Date de publication de la demande: 25.08.2010
(73) Titulaire: European Aeronautic Defence and Space Company EADS France, 75016 Paris (FR)
(72) Inventeur: CAVALIERE, Frédérick, F-78180 Montigny Le Bretonneux (FR)
(74) Mandataire: Maupilier, Didier
(86) Numéro de dépôt international: PCT/EP2008/065977
(87) Numéro de publication internationale: WO 2009/068479

(56) Documents cités:
- WO-A-2005/105402
- DE-A1-102005 056 420
- FR-A- 2 898 538
- FR-A- 2 898 539
- US-A- 5 262 121

## Description

Le présente invention appartient au domaine de la fabrication des pièces en matériaux composites.

Plus particulièrement l'invention concerne la réalisation de noyaux de moulage utilisés pour la fabrication de pièces en matériau composite lorsque les pièces comportent des volumes creux pour lesquelles des noyaux de moulage sont mis en oeuvre à une étape de la fabrication.

Les matériaux composites comportant des fibres maintenues dans une matrice sont aujourd'hui largement utilisés pour la fabrication de pièces dans de nombreux domaines industriels, en particulier dans le domaine aéronautique, y compris pour des pièces structurales, c'est à dire devant supporter des efforts significatifs de l'ordre de grandeur de leur résistance structurale lors de leur utilisation.

De nombreux matériaux composites existent, les plus répandus dans le domaine des pièces destinées à des structures, telles que celles utilisées dans les constructions aéronautiques, étant constitués de fibres plus ou moins longues de matières minérales ou organiques (verre, carbone, aramide...) contenues dans une matrice formée par une résine organique dure qui, à une étape au moins du procédé de fabrication de la pièce, est suffisamment fluide pour permettre la réalisation des formes de la pièces avant d'être durcie, par exemple par polymérisation.

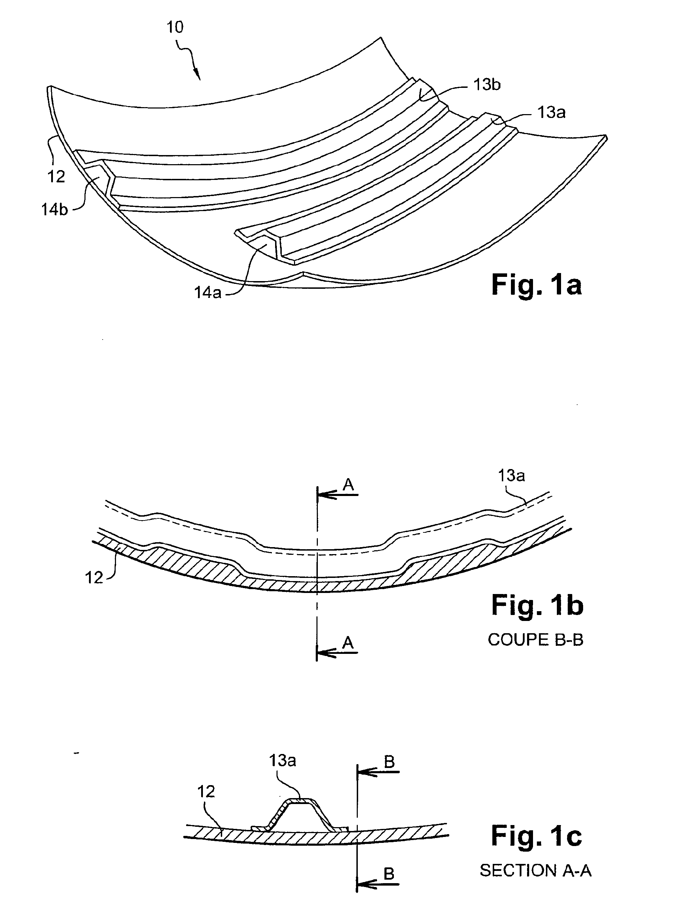

Pour associer légèreté et rigidité, certains éléments tels que des panneaux de structure de grandes dimensions, comme le panneau 10 illustré sur la figure 1a, sont réalisés au moyen d'une peau 12 de relativement faible épaisseur dont la rigidité est renforcée par des raidisseurs 13a, 13b assemblés sur une ou sur les deux faces de ladite peau. Les raidisseurs peuvent avoir des formes variées, par exemple des formes dites en Ω de la figure 1a et de la figure 1c, ou des formes en Z, en U ou en L par exemple.

Les pièces structurales de ce type en matériau composite doivent répondre à des tolérances de fabrication et à des exigences de qualité sévères.

Elles sont le plus souvent réalisées au moyen de moules qui garantissent par un usage approprié les qualités recherchées pour la pièce en particulier les caractéristiques dimensionnelles, la géométrie et la résistance.

Une difficulté particulière rencontrée lors de la réalisation de certaines formes de la pièce comme le panneau raidi 10 de la figure 1a est lié à l'existence de volumes creux refermés 13a, 13b ce qui nécessite en général de mettre en oeuvre des éléments de moule qui se trouvent plus ou moins prisonniers de la pièce fabriquée et qui doivent en être extraits lorsque la matrice du matériau composite de la pièce est dur.

L'extraction de ces éléments de moules ou noyaux doit bien évidemment être réalisée sans endommager la pièce et s'avère plus ou moins difficile lorsque le noyau se trouve relativement enveloppé, voire enfermé, dans la pièce en matériau composite comme par exemple les raidisseurs présentant une section en forme de Ω de la figure 1a.

Dans ce cas, et sauf à réaliser les raidisseurs séparément de la peau et à procéder à un assemblage ultérieur, solution moins satisfaisante sur le plan industriel qu'une réalisation simultanée des différents éléments du panneau, le noyau doit être extrait en le détruisant ou en le déformant car le plus souvent la forme du panneau, du raidisseur et du volume creux qui en résulte présente des variations de forme et de section qui rendent l'extraction du noyau entier très difficile comme l'illustre la figure 1b.

Lorsque, en raison de la forme du volume creux comme celui correspondant à un raidisseur, le noyau est de forme très allongée, il est difficile de concilier à la fois la précision dimensionnelle du noyau, précision nécessaire à la précision des dimensions de la pièce réalisée, et la rigidité du noyau pendant la fabrication de la pièce, rigidité qui conditionne également la précision de la pièce réalisée.

Les noyaux qui sont détruits pour être extraits de la pièce, en particulier les noyaux fusibles, peuvent être réalisés avec de bonnes tolérances dimensionnelles mais ont l'inconvénient d'être lourds et chers à réaliser, d'être à usage unique et d'avoir le plus souvent des coefficients de dilatation différents de ceux des matériaux composites généralement utilisés ce qui rend leur usage problématique pour les formes longues, particulièrement lors de la réalisation de raidisseurs.

Les noyaux totalement en élastomère, en fonction de la section du noyau et de la dureté employée, soit ne présentent pas de stabilité dimensionnelle élevée et sont susceptibles de se déformer pendant la réalisation de la pièce en matériau composite, soit ne présentent pas la striction, et donc une diminution de section, nécessaire lors du démoulage, et se démoulent très difficilement avec risque d'endommagements de la pièce en matériau composite.

Une solution connue décrite dans la demande de brevet française publiée sous le numéro 2898539 conduisant à des résultats de bonne qualité consiste à réaliser les noyaux au moyen de vessies creuses en silicone.

Pour réaliser un noyau, une vessie est réalisée en silicone avec une paroi relativement fine au plus près de la forme voulue du noyau, en pratique dans un moule à vessie ayant la forme du noyau.

La vessie creuse ainsi réalisée est placée dans un moule à noyau rigide ayant la forme voulue pour le noyau dont elle épouse la forme par fabrication même.

L'intérieur creux de la vessie est alors rempli de billes en verre ou en métal et, lorsque la vessie est pleine de billes, l'intérieur de la vessie est mis en dépression ce qui a pour effet de provoquer un compactage des billes qui se trouvent bloquées les unes par rapport aux autres sans modification significative du volume apparent de la vessie.

La vessie est alors sortie du moule à noyau et forme le noyau de dimensions stables, correspondant aux dimensions du moule à noyau, qui peut être mis en oeuvre.

Lorsque la pièce en matériau composite est réalisée, les billes sont retirées de la vessie par une ouverture et l'enveloppe de la vessie devient suffisamment souple et déformable pour être aisément extraite de la pièce.

L'avantage de ce procédé est de pouvoir former des noyaux allongés, ayant la rigidité nécessaire lors de la réalisation de la pièce composite, et étant extractibles sans endommager la pièce en matériau composite. La vessie peut être réutilisée plusieurs fois pour réaliser des noyaux identiques dans le cadre d'une production de pièces en matériau composite en plusieurs exemplaires.

Un inconvénient de ce procédé a pour origine la nécessité de réaliser des vessies par moulage. En effet, il a été constaté par l'inventeur de la présente invention qu'actuellement seule la technique de moulage permet d'atteindre des tolérances de l'ordre du dixième de millimètre sur les dimensions de la section des vessies, précision nécessaire pour la réalisation de pièces composite de qualité aéronautique. Cette technique de moulage pour les vessies devient un inconvénient majeur dans le cadre d'une fabrication de pièce composite à échelle industrielle avec utilisation de noyaux de très grande longueur. En effet, la technique de moulage n'est pas adaptée à la fabrication de vessie de grande longueur du fait d'un risque très important de non étanchéité des vessies, d'un non respect de la forme extérieure des vessies, et d'une diminution de la résistance à la traction.

Les outillages de moulage de grande longueur nécessitent des dispositifs de maintien de l'entrefer de moulage créant des trous dans les vessies, vessies devant être reprises pour réaliser un bouchage des dits trous. Des opérations de raccord bout à bout de segments de vessie afin d'obtenir une vessie de grande longueur peuvent également être réalisées. Les risques élevés de non étanchéité sont dus aux opérations de reprise des vessies et aux opérations d'assemblage bout à bout.

Les opérations de reprise et/ou assemblage des vessies moulées provoquent des défauts de surface des noyaux qui sont à l'origine de marquages des pièces en matériau composite. Ces marquages des pièces composite peuvent provoquer un taux de rebus élevé des pièces composite.

Les opérations de reprise et/ou assemblage des vessies moulées sont aussi des sources de réductions locales de résistance des vessies et augmentent le risque de déchirement de la vessie lors de la traction de la vessie pendant l'opération de démoulage.

Pour ces raisons les vessies moulées de grande longueur ne satisfont pas aux exigences industrielles telles que le coût des noyaux, le respect des tolérances de fabrication des noyaux et des pièces composite ou le taux de rebus des pièces composites.

Une autre conséquence est la nécessité de réaliser autant de modèles de vessies et de moules à vessie que de formes de noyaux à réaliser.

Cette technique de réalisation de noyau s'avère donc coûteuse, et très risquée à mettre en oeuvre sur le plan industriel. Le document US-A-5262121 décrit un procédé selon le préambule de la revendication 1.

Afin de réaliser des noyaux de très grande longueur, de moindre coût, présentant moins de risques techniques, et plus pratiques à réaliser pour une fabrication industrielle de pièces en matériau composite, l'invention propose de réaliser des noyaux au moyen de vessies allongées cylindriques, de section droite constantes. L'invention est définie par les caractéristiques de la revendication 1.

Suivant un procédé de réalisation d'un noyau de moulage pour pièce en matériau composite, le noyau comportant une dimension, la longueur **Ln**, grande devant des dimensions caractéristiques, des largeurs **In** et des hauteurs **hn**, de sections courantes du dit noyau de moulage, le noyau est réalisé au moyen d'une vessie en élastomère déterminant un volume intérieur rempli d'un matériau granulaire et soumise à une pression différentielle Δ**Pe** entre le volume intérieur et un espace extérieur de la vessie, pression telle que le volume intérieur soit à une pression inférieure à l'espace extérieur. Avant remplissage du volume intérieur et avant application de la pression différentielle Δ**Pe** la vessie est conformée dans un moule à noyau, comportant une empreinte en creux aux formes et dimensions du noyau, par déformation au moyen d'une pression différentielle Δ**Pg**, établie entre le volume intérieur de la vessie à une pression **P1** et l'espace extérieur à une pression **P2**, inférieure à **P1**. Cette vessie en élastomère qui avant d'être soumise à la pression différentielle Δ**Pg** et à un remplissage du volume intérieur par le matériau granulaire est sensiblement cylindrique de longueur **Ln** et dont un périmètre d'une section droite courante sensiblement constante est toujours inférieur aux périmètres des sections courantes du noyau.

La pression différentielle Δ**Pg**, qui est appliquée pendant le remplissage du noyau par le matériau granulaire et qui est interrompue avant l'application de la pression différentielle Δ**Pe** et le démoulage du noyau, est obtenue avantageusement au moins en partie par une mise au vide partiel d'un espace situé entre le moule à noyau et une surface extérieure de la vessie et ou par une augmentation de la pression dans le volume intérieur de la vessie.

Pour réaliser une vessie en élastomère pour un tel noyau de moulage d'une pièce en matériau composite et déterminant un volume intérieur de la vessie destiné à être rempli d'un matériau granulaire, une forme essentiellement cylindrique est donnée à la vessie sur une longueur **Ln** correspondant à la longueur du noyau de moulage et dont une section droite de la longueur cylindrique est toujours d'un périmètre inférieur aux périmètres de toutes les sections droites du noyau de moulage.

Afin de pouvoir appliquer efficacement les pressions différentielles prévues, la vessie comporte des parties terminales rapportées aux extrémités de la longueur cylindrique de la vessie, parties terminales qui sont aptes à assurer une étanchéité du volume intérieur de la vessie.

Pour remplir ou vider la vessie du matériau granulaire, l'une au moins des parties terminales comporte une ouverture permettant de remplir ou d'extraire le matériau granulaire du volume intérieur.

Pour être en mesure de faire varier la pression différentielle entre le volume intérieur de la vessie et l'extérieur de la vessie, une au moins des parties terminales comporte des moyens de raccordement à des moyens d'aspiration ou de génération d'un gaz sous pression.

Avantageusement pour réaliser des vessies de longueur quelconque sans contrainte, la longueur cylindrique de la vessie est obtenue par un procédé d'extrusion-pultrusion de l'élastomère qui dans un mode préféré de réalisation est un silicone.

La présente invention est décrite en référence aux figures qui représentent :
- Figure 1 :: déjà citée, à titre d'exemple un panneau raidi représentant une pièce en matériau composite, en perspective sur la figure 1a, en coupe suivant une direction parallèle à la direction longitudinale d'un raidisseur sur la figure 1b, et en coupe suivant une direction perpendiculaire à la direction longitudinale d'un raidisseur sur la figure 1c ;
- Figure 2 :: un exemple de noyau présentée en perspective et avec une section en extrémité ;
- Figure 3 :: un exemple de vessie pour noyau.

L'invention concerne un procédé de réalisation d'un noyau de moulage.

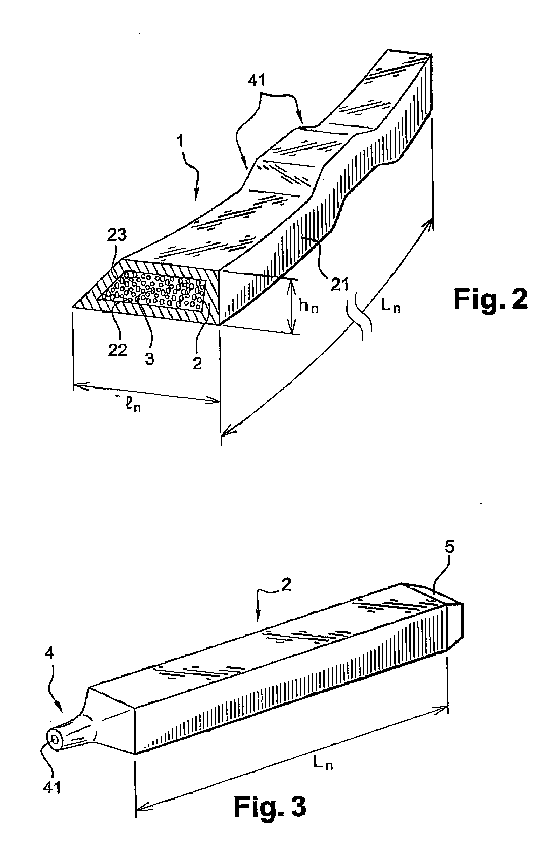

Un noyau de moulage 1, présenté sur la figure 2, mis en oeuvre lors de la fabrication d'une pièce 10 en matériau composite afin de réaliser dans ladite pièce un volume creux 14a, 14b de forme allongé tel qu'un volume refermé d'un raidisseur 13a, 13b d'une peau 12, comporte une vessie 2 en élastomère remplie d'un matériau granulaire 3.

La vessie 2 comporte une surface extérieure 21 qui délimite un volume du noyau 1 et une surface intérieure 22 qui délimite un volume intérieur 23 de la vessie.

L'élastomère de la vessie 2 est un matériau qui présente des caractéristiques d'élasticité, de souplesse et de résistance aux environnements chimiques et thermiques rencontrés dans les processus de fabrication des pièces en matériaux composites.

Par élasticité il faut comprendre que le matériau formant la vessie 2 peut, dans une certaine mesure, s'allonger et reprendre une dimension caractéristique avant allongement.

Par souplesse il faut comprendre que la vessie 2 est en mesure d'être déformée, dans une certaine mesure, sans être endommagée.

Par résistance aux environnements chimiques et thermiques il faut comprendre que le matériau de la vessie 2 n'est pas sensiblement, ou du moins pas rapidement en regard de l'utilisation qui est faite de la vessie, dégradé par les conditions rencontrées lors de la fabrication des pièces en matériaux composites à fibre minérales ou organiques (verre, carbone, aramide...) maintenues par une résine organique, en particulier les conditions liées à l'agressivité chimique des résines et aux opérations de cuissons thermiques généralement mises en oeuvre pour provoquer le durcissement de la résine.

Un tel élastomère est avantageusement un silicone, matériau qui présente les caractéristiques recherchées dans la plupart des situations rencontrées actuellement dans l'industrie pour la fabrication des matériaux composites considérés dans le cadre de la présente invention.

Le noyau de moulage 1 comporte une longueur **Ln** grande devant des dimensions caractéristiques des sections courantes par exemple une largeur **ln** et une hauteur **hn** d'une section du noyau.

Comme dans l'exemple illustré sur la figure 2, le plus souvent le noyau est de forme complexe. Par exemple le noyau comporte au moins une courbure générale, des courbures locales de surface 41, par exemple des courbures correspondant à des variations locales d'épaisseur de la peau 12, et des sections courantes plus ou moins évolutives en dimensions et en forme.

Ces caractéristiques géométriques sont nécessaires pour qu'un raidisseur 13a, 13b réalisé en utilisant le noyau 1 considéré présente toutes les caractéristiques voulues et en particulier soit en parfaite adéquation avec la peau 12 du panneau 10 auquel ledit raidisseur est intégré, ledit panneau pouvant présenter des formes complexes tels que des courbures multiples et une peau comportant une surface d'appui du raidisseur de forme non régulière comme illustré sur la figure 1b.

Pour réaliser le noyau 1, la vessie 2 présentée sur la figure 3 est une vessie en élastomère, par exemple du silicone qui, avant une mise en conformation pour réaliser le noyau, présente une forme cylindrique.

En pratique la vessie a une section courante constante à des tolérances de fabrication près, et est formée d'une seule pièce sur sa longueur par un procédé continu d'extrusion-pultrusion.

Le procédé d'extrusion-pultrusion est un procédé connu au cours duquel le matériau formé passe au travers d'une filière d'une section de sortie donnée prédéterminée et s'applique aux élastomères et en particulier au silicone comme matériau extrudé.

En outre un périmètre extérieur d'une section droite courante de la vessie, correspondant à la surface extérieure 21 de la vessie 2, est choisi au plus égal, de préférence toujours légèrement inférieur, au plus faible des périmètres des sections courantes du noyau à réaliser avec ladite vessie et la forme de la section constante de la vessie est choisie dans la mesure du possible pour s'approcher des formes des sections du noyau à réaliser.

Ces caractéristiques de la vessie extrudée sont obtenues en donnant à une filière d'extrusion des formes et dimensions voulues en tenant compte de la dispersion des dimensions de la vessie réalisée par le procédé d'extrusion-pultrusion.

En effet en raison d'un comportement difficile à maîtriser du matériau extrudé, l'élastomère, à la sortie de la filière, les dimensions des sections de la vessie 2 présentent des écarts sensibles par rapport aux dimensions théoriques, en pratique de l'ordre de plus ou moins un millimètre, très supérieur aux tolérances voulues pour le noyau 1.

Pour réaliser une vessie 2, une longueur utile **Ln** de vessie de section constante est obtenue par extrusion-pultrusion, longueur **Ln** théoriquement illimitée et qui atteint par ce procédé sans difficultés des valeurs dont les ordres de grandeurs sont d'au moins deux fois supérieurs au valeurs des dimensions **In** et **hn** caractéristiques de la section de la vessie, et est fermée à ses extrémités par des parties rapportées 4, 5 qui réalisent une étanchéité du volume 23 intérieur de la vessie.

La longueur **Ln** est de préférence au moins égale à la longueur du volume en creux 14a, 14b à réaliser, par exemple dans le panneau considéré la longueur des raidisseurs 13a, 13b.

Une première partie rapportée 4 à une première extrémité de la vessie 2 comporte une ouverture 42 dont la section est choisie pour permettre le remplissage et l'évacuation du volume intérieur 23 de la vessie par le matériau granulaire 3.

L'ouverture 42 est aussi apte à être raccordée à des moyens de contrôle (non représentés) de la pression d'un gaz, avantageusement de l'air, dans la vessie.

De tels moyens consistent essentiellement en des moyens d'aspiration ou de soufflage du gaz.

La seconde partie rapportée 5 à la seconde extrémité opposée à la première extrémité est un élément de fermeture de la vessie.

De préférence la dite seconde partie rapportée a une forme adaptée à la forme voulue pour le volume en creux de la pièce 10 à réaliser.

Avantageusement cette forme de la seconde partie rapportée 5 est définie en outre pour faciliter l'extraction de la vessie 2 lorsque la pièce 10 en matériau composite a été réalisée, par exemple une forme de tronc de cône ou en biseau.

Dans une forme de réalisation, non représentée, chaque extrémité comporte une ouverture et est conformée pour répondre à des exigences de la pièce à réaliser.

Par exemple une extrémité de la vessie comporte une ouverture adaptée au remplissage et à l'évacuation du matériau granulaire et l'autre extrémité de la vessie comporte une ouverture adaptée au raccordement des moyens de contrôle de la pression du gaz dans la vessie.

Une description du procédé de mise en oeuvre de la vessie 2 pour réaliser le noyau 1 permet de mieux comprendre les avantages des caractéristiques de la vessie 2.

Dans une première étape, pour réaliser le noyau 1, la vessie 2 est placée dans un moule rigide fermé dans lequel une empreinte en creux correspond à la forme et aux dimensions du noyau 1 à réaliser.

De manière connue, le moule est formé par un assemblage d'éléments afin de faciliter l'extraction du noyau 1 une fois ledit noyau réalisé.

En raison des caractéristiques dimensionnelles de la vessie 2, dont le périmètre est toujours, avant de subir des déformations, inférieur aux périmètres des différentes sections du noyau 1, ladite vessie en élastomère est en mesure d'être placée dans l'empreinte du moule sans qu'il soit nécessaire de créer une compression des parois de la vessie.

Dans une seconde étape une pression différentielle est introduite entre le volume intérieur 23 de la vessie 2 d'une part à une pression intérieure **P1** et un volume extérieur à la vessie, volume entre autre déterminé par la surface extérieure 21 de la vessie 2 et une surface de l'empreinte du moule, à la pression extérieure **P2**.

Au cours de cette seconde étape, la pression **P1** est maintenue supérieure à la pression **P2** et la valeur de la pression différentielle Δ**Pg = P1-P2** est établie et maintenue à une valeur suffisante pour que la surface extérieure 21 de la vessie 2 se trouve déformée et plaquée contre la surface de l'empreinte du moule de sorte que la vessie a alors exactement la forme de l'empreinte du moule et donc du noyau 1.

Ce résultat est atteint grâce à l'élasticité des parois de la vessie 2 en élastomère lorsque la pression différentielle Δ**Pg** est amenée à une valeur adaptée compte tenu des caractéristiques de la vessie, notamment ses dimensions et l'épaisseur de la paroi.

La pression différentielle Δ**Pg** est obtenue par une augmentation de la pression **P1** dans la vessie, un gonflage de la vessie, ou par une diminution de la pression **P2** dans le moule, une mise au vide partiel du moule, ou par une combinaison de ces deux méthodes, l'opération étant de manière pratique réalisée dans un atelier à la pression atmosphérique.

Dans une troisième étape, la pression différentielle Δ**Pg** étant maintenue, le volume intérieur 23 de la vessie 2 est rempli par l'ouverture 42 avec le matériau granulaire 3, par exemple des billes rigides telles que des billes métalliques ou des billes en verre boroscilicate, de dimensions suffisamment réduites pour remplir sans difficultés ledit volume intérieur de la vessie.

Dans le cas présent d'un noyau 1 de grande longueur, il sera de préférence utilisé comme matériau granulaire 3 un matériau dont le coefficient de dilatation est voisin de celui du matériau composite de la pièce 10 à réaliser afin d'éviter d'introduire au cours du processus de fabrication de la pièce des contraintes qui auraient pour origine des différences de dilatation entre le matériau composite de la pièce d'une part et le noyau d'autre part dont la longueur favorise l'allongement sous l'effet des changements de température lors du processus de fabrication.

Dans une quatrième étape, lorsque le volume intérieur 23 de la vessie 2 est rempli du matériau granulaire 3, la pression différentielle Δ**Pg** est relâchée, c'est à dire que les pressions **P1** et **P2** sont amenées à des valeurs voisines, et une nouvelle pression différentielle Δ**Pe** est créée entre le volume intérieur 23 et l'espace extérieur de la vessie et dont le signe est inversé par rapport à Δ**Pg**, c'est à dire que le volume intérieur de la vessie est à une pression **P'1** inférieure à la pression **P'2** de l'espace extérieur.

Cette pression différentielle Δ**Pe = P'1-P'2,** qui provoque des forces d'écrasement de la vessie 2, a pour effet de provoquer un compactage du matériau granulaire 3, compactage qui a lui-même pour effet, en raison de la nature et du remplissage dudit matériau granulaire, de stabiliser la forme du noyau 1 sans en modifier sensiblement le volume.

Avantageusement, pour créer la pression différentielle Δ**Pe**, le volume intérieur 23 de la vessie 2 est soumis à un vide partiel alors que la pression extérieure est celle de la pression atmosphérique.

Dans une cinquième étape, alors que la pression différentielle Δ**Pe** est maintenue, le noyau 1 formé est sorti du moule à noyau, prêt à être utilisé pour la réalisation de la pièce 10 en matériau composite.

Lorsque la pièce 10 en matériau composite est durcie, le matériau granulaire 3 dans la vessie est évacué au moins en partie par l'ouverture 42 prévue à cet effet et la vessie 2, dont l'enveloppe en élastomère ayant perdue sa rigidité et sa stabilité dimensionnelle est encore dans la pièce, est extraite sans difficulté par traction à l'une de ses extrémités en raison de sa relative souplesse.

Grâce au procédé de préparation du noyau 1 de grande longueur à partir de la vessie 2 essentiellement cylindrique en élastomère, il est possible d'utiliser des vessies réalisées par extrusion-pultrusion avec des tolérances de fabrication de la vessie, sur les dimensions caractéristiques des sections, compatibles du procédé d'extrusion-pultrusion appliqué au matériau en élastomère de la vessie, en particulier au silicone.

La longueur Ln de la vessie n'est en théorie pas limitée, et ne fait pas appel à des techniques de raccordement d'éléments pour augmenter la longueur de la vessie, raccordements sources de défauts de moulage donc source de marquages sur pièce composite finale, et risques de déchirement de la vessie lors du démoulage des noyaux.

Grâce au procédé, il est également possible de réaliser des noyaux de formes, en particulier de courbures et de lois de variations de sections courantes, différentes à partir de la même vessie ou d'un même modèle de vessie, ce qui simplifie sensiblement le processus industriel de fabrication des noyaux et de gestion des vessies.

Il est ainsi possible de fabriquer des vessies pour la réalisation de noyaux de très grande longueur, adaptés à la réalisation de panneaux en matériau composite comportant des volumes creux très allongés tels que les volumes enveloppés par les raidisseurs, de manière économique, d'une mise en oeuvre simplifiée par rapport à des vessies de l'art antérieur, et diminuant de manière importante les risques industriels tels que des défauts de forme, marquages des pièces composite, et déchirement des vessies au démoulage des noyaux.

## Revendications

1. Procédé de réalisation d'un noyau (1) de moulage pour la fabrication de pièces (10) en matériau composite comportant des volumes creux, au moyen d'une vessie (2) en élastomère déterminant un volume intérieur (23) rempli d'un matériau granulaire (3) et soumise à une pression différentielle Δ**Pe** entre le volume intérieur (23) et un espace extérieur de ladite vessie telle que le volume intérieur (23) soit à une pression inférieure à l'espace extérieur, le dit procédé comportant, avant une étape de remplissage du volume intérieur (23) par le matériau granulaire (3) et avant une étape d'application de la pression différentielle Δ**Pe**, une étape de conformation du noyau (1) dans un moule à noyau, ledit moule à noyau comportant une empreinte en creux aux formes et dimensions du noyau, par déformation de la vessie (2) au moyen d'une pression différentielle Δ**Pg** entre le volume intérieur (23) de ladite vessie à une pression **P1** et l'espace extérieur à une pression **P2**, inférieure à **P1**, **caractérisé en ce que** :
- avant d'être conformée dans le moule à noyau, la vessie (2) en élastomère est cylindrique, à des tolérances de fabrication près, et de longueur **Ln** de plusieurs ordre de grandeur supérieure à des largeurs **ln** et des hauteurs **hn** de sections courantes du noyau de moulage (1) ;
- avant d'être conformée dans le moule à noyau, un périmètre de la vessie (2) en élastomère, constant suivant la longueur **Ln** aux tolérances de fabrication près, est inférieur au plus faible des périmètres des sections du noyau (1) ;
- la pression différentielle Δ**Pg** est appliquée à la vessie (2) en élastomère de sorte qu'une surface extérieure (21) de ladite vessie soit déformée pour reproduire les courbures générales et les courbures locales (41) du noyau (1).

2. Procédé suivant la revendication 1 dans lequel la pression différentielle Δ**pg** est obtenue au moins en partie par une mise au vide partiel d'un espace situé entre le moule à noyau et une surface extérieure (21) de la vessie (2).

3. Procédé suivant la revendication 1 ou la revendication 2 dans lequel la pression différentielle Δ**Pg** est obtenue au moins en partie par une augmentation de la pression dans le volume intérieur (23) de la vessie (2).

4. Procédé de réalisation d'un noyau suivant l'une des revendications 1 à 3 dans lequel la longueur **Ln** cylindrique de la vessie (2) est obtenue par un procédé d'extrusion-pultrusion de l'élastomère.

5. Procédé suivant la revendication 4 dans lequel l'élastomère de la vessie (2) est un silicone.

## Claims

1. A process for making a molding core (1) for the manufacture of parts (10) made of composite materials comprising hollow volumes, by means of an elastomeric bladder (2) determining an internal volume (23) filled with a granular material (3) and subjected to a differential pressure Δ**Pe** between the internal volume (23) and an external space of the said bladder such that the internal volume (23) is at a pressure below the external space, the said process comprising, prior to a phase involving the filling of the internal volume (23) with a granular material (3) and prior to a phase in which a differential pressure Δ**Pe** is applied, a phase in which the core (1) is shaped in a core mold, the said core mold comprising a hollow cavity with the shape and dimensions of the core, by deforming the bladder (2) by means of a differential pressure Δ**Pg** between the internal volume (23) of the said bladder at a pressure **P1** and the external space at a pressure **P2**, below pressure **P1**, **characterized in that**:
- Prior to shaping in the core mold, the elastomeric bladder (2) is cylindrical, close to manufacturing tolerances, and of a length **Ln** of several magnitudes greater that widths **ln** and heights **hn** of standard cross sections of the molding core (1) ;
- Prior to shaping in the core mold, a perimeter of the elastomeric bladder (2), constant over the length **Ln** close to manufacturing tolerances, is lower than the lowest perimeters of the cross sections of the molding core (1) ;
- differential pressure Δ**Pg** is applied to the elastomeric bladder (2) such that an external surface (21) of the said bladder is deformed to produce general and local curves (41) of the molding core (1).

2. A process according to claim 1 in which the differential pressure Δ**Pg** is obtained at least in part by a partial vacuuming of the a space located between the core mold and an external surface (21) of the bladder (2).

3. A process according to claim 1 or 2 in which the differential pressure Δ**Pg** is obtained at least in part by an increase in the pressure within the internal volume (23) of the bladder (2).

4. A process for making a molding core according to one of claims 1 to 3 in which the cylindrical length **Ln** of the bladder (2) is obtained by a method of extrusion-pultrusion of the elastomer.

5. A process according to claim 4 in which the elastomer of the bladder (2) is a silicone.

## Patentansprüche

1. Verfahren zur Ausführung eines Formgusskerns (1) zur Fertigung von Teilen (10) aus Verbundwerkstoff mit Hohlvolumina, mithilfe einer Elastomerblase (2), die ein Innenvolumen (23) bestimmt, das mit einem körnigen Material (3) gefüllt ist, und die einem Differenzdruck Δ**Pe** zwischen dem Innenvolumen (23) und einem Bereich außerhalb der besagten Blase ausgesetzt ist, sodass das Innenvolumen (23) einen geringeren Druck aufweist, als der Außenbereich, wobei das besagte Verfahren vor einem Schritt des Auffüllens des Innenvolumens (23) mit dem körnigen Material (3) und vor einem Schritt der Anwendung des Differenzdrucks Δ**Pe** einen Schritt zur Bildung des Kerns (1) in einer Kerngussform umfasst, wobei die besagte Kerngussform ein hohles Gesenk mit den Formen und Abmessungen des Kerns umfasst, durch die Verformung der Blase (2) mithilfe eines Differenzdrucks Δ**Pg** zwischen dem Innenvolumen (23) der besagten Blase mit einem Druck **P1**, und dem Außenbereich mit einem Druck **P2**, kleiner als **P1**, **dadurch gekennzeichnet, dass**:
- die Elastomerblase (2) vor der Ausformung in der Kerngussform von Fertigungstoleranzen abgesehen zylindrisch ist, und die Länge **Ln** aufweist, die um mehrere Größenordnungen größer als die Breiten **In** und die Höhen **hn** der durchgehenden Abschnitte des Formgusskerns (1) ist;
- ein vor der Ausformung in der Kerngussform von Fertigungstoleranzen abgesehen über die Länge **Ln** hindurch konstanter Umfang der Elastomerblase (2) kleiner ist, als der kleinste Umfang der Abschnitte des Kerns (1);
- der Differenzdruck Δ**Pg** auf die Elastomerblase (2) angewandt wird, sodass eine Außenfläche (21) der besagten Blase verformt wird, um die allgemeinen Krümmungen und die lokalen Krümmungen (41) des Kerns (1) nachzubilden.

2. Verfahren nach Anspruch 1, bei dem man den Differenzdruck Δ**Pg** zumindest teilweise durch eine Teil-Vakuumbeaufschlagung eines Raumes erreicht, der zwischen der Kerngussform und einer Außenfläche (21) der Blase (2) angesiedelt ist.

3. Verfahren nach Anspruch 1 oder nach Anspruch 2, bei dem man den Differenzdruck Δ**Pg** zumindest teilweise durch eine Erhöhung des Druckes im Innenvolumen (23) der Blase (2) erreicht.

4. Verfahren zur Ausfahrung eines Formgusskerns nach einem der Ansprüche 1 bis 3, bei dem man die zylindrische Länge **Ln** der Blase (2) durch ein Verfahren des Extrusionsblasens und der Pultrusion des Elastomers erhält.

5. Verfahren nach Anspruch 4, bei dem das Elastomer der Blase (2) ein Silikon ist.
